# EUROPÄISCHE PATENTSCHRIFT

(11) **EP 3 222 980 B1**
(45) Veröffentlichungstag und Bekanntmachung des Hinweises auf die Patenterteilung: **03.04.2019**
(21) Anmeldenummer: 16179787.3
(22) Anmeldetag: 15.07.2016
(51) Int. Cl.: G01F 25/00, G01F 5/00, G01F 15/18, G01F 1/66, G01F 1/684

(54) **DURCHFLUSSMESSGERÄT MIT FEHLERERKENNUNG**
FLOW METER WITH ERROR DETECTION
APPAREIL DE MESURE DE DÉBIT AVEC DÉTECTION D'ERREUR

(30) Priorität: 24.03.2016 DE 102016105553
(43) Veröffentlichungstag der Anmeldung: 27.09.2017
(73) Patentinhaber: Elster GmbH, 55252 Mainz-Kastel (DE)
(72) Erfinder: TEMME, Herr Guido, 49186 Bad Iburg (DE); MATTER, Daniel, Herr, 5200 Brugg (CH); SABBATTINI, Bruno, Herr, 8006 Zürich (CH)
(74) Vertreter: Zenz Patentanwälte Partnerschaft mbB

(56) Entgegenhaltungen:
- WO-A1-97/38287
- DE-A1-102012 012 252
- US-A- 5 661 232
- US-A1- 2005 222 782
- US-A1- 2010 089 459
- US-A1- 2014 260 513

## Beschreibung

Die Erfindung betrifft eine Messvorrichtung zur Erfassung eines Fluidflusses.

Insbesondere betrifft die Erfindung ein Durchflussmessgerät für Fluide, mit dem eine charakteristische Größe eines Fluidstromes bestimmt wird.

Durchflussmessgeräte dienen im Allgemeinen dazu, den Durchfluss eines fluiden Mediums, beispielsweise einer Flüssigkeit oder eines Gases, in einem durchströmten Körper zu messen. Meist wird ein Fluidstrom durch ein Rohr geleitet und die gemessene Durchflussrate des Fluides soll ermittelt werden. Dabei kann sowohl ein Volumenstrom, also ein Volumen pro Zeit ermittelt werden als auch das kumulierte Volumen selbst durch Integration bzw. Summation des Volumenstroms über die Zeit bestimmt werden. Hierbei kann insbesondere im Falle von Gas je nach Auslegung und Bauart des Messgerätes ein von Temperatur und Druck abhängiges sogenanntes Betriebsvolumen ermittelt werden, außerdem auch ein von Temperatur und Druck unabhängiges Normvolumen. Andererseits kann bei Kenntnis der Dichte des fluiden Mediums und der Rohrleitungsgeometrie, auch ein Massestrom, ausgedrückt in Masse pro Zeit, berechnet werden.

Dem Messvorgang liegt die Wandlung der physikalischen Größe des Durchflusses in ein technisch weiterverwertbares Signal einer anderen physikalischen Größe zugrunde. Derartige Wandler sind bei herkömmlichen Durchflussmessgeräten in verschiedener Gestaltung bekannt, beispielsweise kann ein Spannungssignal, ein Frequenzsignal oder ein Datensignal erzeugt werden, wobei die Wandlung durch einen Durchflusssensor erfolgt. Aus dem Dokument EP 2 453 214 A1 ist ein solcher Durchflusssensor zum Einsatz in der Messstrecke eines Hauptströmungsrohres bekannt.

Eine bewährte und bekannte Anordnung für die Messung sind sogenannte Bypass-Systeme. Dabei wird an einer Bypass-Eingangsöffnung von dem Hauptstrom in dem Hauptströmungsrohr ein Teilstrom an einem Abgriff abgezweigt und durch eine Bypass-Leitung stromabwärts wieder an einem Abgriff dem Hauptstrom zugeführt. In diesem Bypass-Strom wird ein Sensor angeordnet, welcher charakteristische Größen der Bypass-Strömung erfasst. Erforderlich für eine genaue Messung ist dabei, dass in dem betrachteten Messbereich der Bypass-Durchfluss in einem möglichst konstanten Verhältnis zum Hauptstrom-Durchfluss steht, jedenfalls in einem bekannten und reproduzierbaren Zusammenhang. Derartige Durchflussmessgeräte wirken also verlässlich in solchen Bereichen, in denen ein bekanntes, monotones, annähernd konstantes Verhältnis zwischen dem Strom im Hauptströmungsrohr und dem Bypass-Strom besteht.

Ob und wieviel Fluid durch den Bypass-Strom tritt, ist abhängig von der Druckdifferenz zwischen der Bypass-Eintrittsöffnung, im Weiteren als Zustrom-Abgriff bezeichnet, und Bypass-Austrittsöffnung, im Weiteren als Abstrom-Abgriff bezeichnet. Je größer diese Druckdifferenz ist, desto mehr Fluid wird durch den Bypass geleitet. Obwohl die Abgriffe entlang des Hauptströmungsrohres versetzt angeordnet sind, reicht regelmäßig die durch die Rohrlänge im Hauptströmungsrohr hervorgerufene Druckdifferenz nicht aus, um ausreichend Fluid durch den Bypass zur Erfassung strömen zu lassen.

Daher sind Bypass-Messanordnungen bekannt, bei denen ein Flussbegrenzungsmittel oder auch Druckabfall-Erzeuger zwischen dem Zustrom-Abgriff des Bypasses und dem Abstrom-Abgriff des Bypasses im Hauptströmungsrohr angeordnet werden.

Beispielsweise offenbart die WO 2001/061282 A2 eine derartige Messeinrichtung. Der Bypass übergreift dabei eine Strömungsbegrenzungseinrichtung. Bei der gezeigten Darstellung ist die Strömungsbegrenzungseinrichtung mit einer Vielzahl von Kanälen mit z.B. wabenartiger Anordnung und Querschnitt ausgebildet.

Das Dokument WO 2004/092687 A1 offenbart eine andere Gestaltung der Strömungsbegrenzungsmittel, bei der die Durchgangskanäle in einer besonderen Geometrie und mit besonderen Abmessungen angeordnet sind.

Das Dokument US 5,750,892 offenbart ebenfalls ein Flussbegrenzungsmittel, wobei der Bypass die Flussbegrenzungsmittel nicht vollständig übergreift, sondern nur einen Abschnitt der Flussbegrenzungsmittel übergreift. Dies soll am Eingang und am Ausgang der Flussbegrenzungsmittel auftretende Turbulenzen vom Bypass fernhalten.

Die US2014/0260513 A1 beschreibt einen Massenflusssensor mit erweiterter Diagnostik, bei dem mehrere Sensoren an einem Bypass angeordnet sind.

Die DE 10 2012 012 252 A1 offenbart ein System zur Durchflussmessung mit mehrere Durchflussmessgeräten.

Als Durchflusssensoren kommen bei den Systemen z.B. thermische Durchflusssensoren zum Einsatz. Es ist jedoch auch möglich, je nach Gestaltung und Dimensionierung der Messeinrichtung, mechanische Messwertaufnehmer einzusetzen oder andere Systeme, beispielsweise Ultraschallsensoren.

Bei den gattungsgemäßen Systemen mit einem Strömungsbypass und einem im Bereich des Bypasses angeordneten Strömungsbegrenzers ist darauf zu achten, dass der Strömungsbegrenzer die Strömungen im Hauptströmungsrohr möglichst in einer Weise beeinflusst, dass zwar eine Druckdifferenz zum Durchströmen des Bypasses hergestellt wird, jedoch auch ein möglichst reproduzierbarer und möglichst linearer Zusammenhang zwischen der Hauptströmung und der Bypass-Strömung besteht. Einfache Bauteile, wie beispielsweise Blendenringe, erzeugen einen nichtlinearen Zusammenhang in der Druckdifferenz an den Bypass-Abgriffen bei variierendem Durchfluss. Näherungsweise steigt bei einer Blende beispielsweise der Druckabfall quadratisch mit dem Durchfluss an. Außerdem können mit der Zeit auftretende Verunreinigungen des Strömungsbegrenzungsmittels, beispielsweise Verstopfungen oder Abnutzungen und Absplitterungen das Strömungsverhalten verändern und Messergebnisse verfälschen.

Aufgabe der Erfindung ist es, eine verlässliche und selbstkontrollierende Einrichtung zur Messung von Fluidströmen bereitzustellen.

Diese Aufgabe wird gelöst durch eine Messeinrichtung mit den Merkmalen des Patentanspruchs 1.

Die erfindungsgemäße Messvorrichtung zur Erfassung eines Fluidflusses (Volumenstromes) weist ein Hauptströmungsrohr zur Führung eines Fluidstromes auf. Dieses Hauptströmungsrohr kann z.B. ein Rohrabschnitt sein, der in einem Messgehäuse eines Fluidzählers, insbesondere eines Gaszählers angeordnet ist. Zu diesem Hauptströmungsrohr ist eine Bypass-Anordnung ausgebildet, welche einen Zustrom-Abgriff und einen Abstrom-Abgriff aufweist. Diese Abgriffe sind mit dem Hauptströmungsrohr in Fluidkommunikation gekoppelt, um einen Teilstrom aus dem Hauptströmungsrohr durch Abschnitte der Bypass-Anordnung zu führen.

Im Rahmen dieser Anmeldung ist als Bypass-Anordnung eine solche Kanalstruktur oder Leitungsstruktur zu verstehen, welche eine Fluidpassage unter Umgehung eines Abschnitts des Hauptströmungsrohres zur Verfügung stellt. Die Bypass-Anordnung kann erfindungsgemäß entsprechend eine einzige, zusammenhängende Leitungsstruktur aufweisen, es können jedoch auch mehrere, getrennte Leitungsstrukturen zur Umgehung von Abschnitten des Hauptströmungsrohres gebildet sein, welche zusammen die Bypass-Anordnung bilden.

Um eine Erhöhung der Druckdifferenz zwischen dem Zustrom-Abgriff und dem Abstrom-Abgriff zu erreichen, sind Flussbegrenzungsmittel in dem Hauptströmungsrohr angeordnet. Diese Flussbegrenzungsmittel haben den Zweck, die Strömung im Hauptströmungsrohr zur Erzeugung einer Druckdifferenz zu hemmen. Als Synonyme der Flussbegrenzungsmittel können auch die Begriffe Differenzdruckmittel, Drosselmittel, Druckabfall-Erzeuger, Strömungsbegrenzungseinrichtung oder auch "Pressure Dropper" verwendet werden.

Als Flussbegrenzungsmittel kommen beliebige Mittel aus dem Stand der Technik in Betracht, insbesondere solche, die eine möglichst lineare Druckdifferenzerhöhung zwischen ihren Enden in Abhängigkeit von dem Volumenstrom des Fluides erzeugen. Beispielhaft ist hier als Flussbegrenzungsmittel eine Gestaltung möglich, wie sie in der WO 2001/061282 A2 mit wabenartigen Kanälen gezeigt ist oder in der WO 2004/092687 A1 mit einer Vielzahl von parallelen Strömungskanälen mit kreisrundem Querschnitt.

Die Flussbegrenzungsmittel sind zwischen dem Zustrom-Abgriff und dem Abstrom-Abgriff angeordnet. Die Flussbegrenzungsmittel können dabei in ihrer Länge und Positionierung so bemessen sein, dass die Bypass-Anordnung die Flussbegrenzungsmittel (oder im Falle von mehrteiligen Flussbegrenzungsmitteln alle Teile) vollständig übergreift. Auf diese Weise werden die Druckerhöhungseffekte der Flussbegrenzungsmittel auf deren Einströmungsseite in Strömung durch Abschnitte der Bypass-Anordnung umgewandelt.

Mit der Bypass-Anordnung ist ein erster Durchflusssensor gekoppelt. Im Rahmen der Erfindung ist die Verwendung beliebiger Durchflusssensoren möglich, insbesondere sind thermische Durchflusssensoren einsetzbar oder auch Durchflusssensoren mit anderen Erfassungssystemen, beispielsweise Ultraschallsensoren.

Eine Auswerteschaltung ist mit einem Signalausgang des ersten Durchflusssensors gekoppelt, wobei die Auswerteschaltung ausgebildet ist, um einen Fluiddurchfluss durch die Messvorrichtung zu erfassen. Die Auswerteschaltung kann in einer Baueinheit mit dem Durchflusssensor integriert sein, jedoch auch separat ausgebildet sein.

Ein zweiter Durchflusssensor ist ebenfalls mit der Bypass-Anordnung gekoppelt. Für diesen zweiten Durchflusssensor gilt ebenso wie für den ersten Durchflusssensor, dass ein beliebiges Erfassungskonzept eingesetzt werden kann, insbesondere eine thermische Durchflusserfassung oder eine Durchflusserfassung mit Ultraschall.

Der erste und der zweite Durchflusssensor sind derart ausgebildet und mit der Bypass-Anordnung gekoppelt, dass die Sensoren voneinander verschiedene Übertragungsfunktionen zur Wandlung eines Fluidflusses in ein Sensorsignal aufweisen, so dass die Sensoren bei einem identischen Fluidfluss durch das Hauptströmungsrohr unterschiedliche Sensorsignale liefern. Unter einer Übertragungsfunktion ist in diesem Zusammenhang allgemein der reproduzierbare Zusammenhang zwischen einer Messgröße und einem Sensorsignal zu verstehen. Im Wege einer Kalibrierung oder auch Eichung kann anhand kontrollierter Vorgabe von Messgrößen ein Bezug zwischen Sensorsignal und Messgröße empirisch ermittelt und gespeichert werden. Dieser Zusammenhang ist dann als Übertragungsfunktion in einem Messsystem hinterlegt. Gemäß der Erfindung kann die Übertragungsfunktion z.B. in der Auswerteschaltung gespeichert sein, welche die Signale der Durchflusssensoren erfasst.

Erfindungsgemäß stimmen die Übertragungsfunktionen des ersten und des zweiten Durchflusssensors nicht überein, so dass die Durchflusssensoren bei identischem Fluidfluss durch das Hauptströmungsrohr unterschiedliche Sensorsignale liefern. Diese Bedingung soll über den gesamten ausgewerteten Messbereich erfüllt sein. Da die Durchflusssensoren gemäß ihren Übertragungsfunktionen kalibriert werden, sind identischen Fluidflüssen einander paarweise unterschiedliche Sensorsignale zugeordnet.

Erfindungsgemäß werden die Übertragungsfunktionen als jeweils nichtlineare Funktionen gewählt, die zueinander nicht-proportional sind. Die Übertragungsfunktionen können sowohl durch eine Ausgestaltung der Durchflusssensoren, als auch durch ihre Lage und Position im Bypass und durch die Gestaltung des Bypasses beeinflusst und geformt werden. Entsprechend kann z.B. die Anströmung jedes der Sensoren lokal beeinflusst werden, damit dieser im Bypass ein anderes Strömungsverhalten sieht als der jeweils andere Durchflusssensor. Dies wird weiter unten beschrieben.

Die Auswerteschaltung ist mit einem Signalausgang des zweiten Durchflusssensors gekoppelt, so dass eine Kopplung mit beiden Durchflusssensoren gegeben ist.

Die Auswerteschaltung ist ausgebildet, um Signalwerte des ersten und des zweiten Durchflusssensors zu erfassen und daraus einen Fluiddurchfluss durch die Messvorrichtung zu bestimmen und außerdem wiederholt eine Plausibilitätsprüfung anhand der Signalwerte auszuführen und in Abhängigkeit von der Plausibilitätsprüfung eine Störung eines der Sensoren oder beider Sensoren zu bestimmen.

Die Plausibilitätsprüfung wird derart ausgeführt, dass anhand der Kalibrierkurven zugehörige Fluidflüsse für jeden einzelnen Sensor ermittelt werden und verglichen werden. Weichen die Fluidflüsse voneinander ab, wobei die Abweichung mehr als eine vorgegebene Mindestabweichung betragen muss, wird eine Störung festgestellt.

Dieser Ansatz bringt also die Auswerteschaltung dazu, Signale der einzelnen Durchflusssensoren zu erfassen. Die Durchflusssensoren sind mit den unterschiedlichen Übertragungsfunktionen ausgestattet und liefern bei identischem Durchfluss unterschiedliche Signale. Anhand der Übertragungsfunktion werden diese Signale in der Auswerteschaltung jeweils in Fluidflüsse umgewandelt. Die Fluidflüsse müssen für alle Sensoren, die Signale im Nutzbereich liefern, übereinstimmen, auch wenn für jeden Sensor unterschiedliche Übertragungsfunktionen zur Auswertung herangezogen werden. Verschlechtert sich nun der Zustand eines der Sensoren, wird dies zwangsläufig zu einer Abweichung der Werte führen und ein Fehler wird erkannt. Verändern sich jedoch beispielsweise beide Sensoren zum Beispiel durch lineare Alterungsprozesse, führen die nichtlinearen Übertragungsfunktionen auch bei identischer Verschlechterung der Sensoren zu einem unterschiedlichen Effekt. Die in der Auswerteschaltung ermittelten Werte für den Fluidfluss stimmen dann nicht mehr überein und es kann auf einen Fehlerzustand geschlossen werden.
Die Erfindung nutzt also eine erweiterte Redundanz, wobei die Durchflusssensoren eine identische Messgröße erfassen, jedoch mit anderen Übertragungsfunktionen. Bei einer störungsfreien Funktion werden die Durchflusssensoren unterschiedliche, konsistente Werte liefern, die einem (im Rahmen der Messgenauigkeit) identischen Fluidfluss zugeordnet sind.

Zeigt einer der Durchflusssensoren eine Störung, fällt aus oder liefert fehlerhafte Signale, so sind die gelieferten Daten inkonsistent und die Auswerteschaltung erkennt im Rahmen der Plausibilitätsprüfung diese Störung, da jeder der Sensoren unterschiedliche Fluidflüsse meldet. Diese Störungserkennung allein würde einer einfachen redundanten Auslegung mit mehreren identischen Durchflusssensoren mit identischen oder beliebigen Übertragungsfunktionen entsprechen. Ebenso wie eine technische Störung kann auch eine Verschmutzung eines Sensors oder eine Blockade oder Verschmutzung des Bypasses, welche die Anströmung eines Sensors verändert, detektiert werden.

Gemäß der Erfindung ist jedoch auch eine Störungserkennung möglich, wenn beide Durchflusssensoren gleichzeitig und sogar gleichartig gestört sind. In dem Stand der Technik war eine solche Erkennung problematisch, da die gleichzeitige Verschlechterung selbst bei redundanter Auslegung unter Umständen fehlerhafte, aber dennoch konsistente Werte lieferte. Bei der erfindungsgemäßen Auslegung der Übertragungsfunktion ist jedoch auch dieser Fall der gleichzeitigen Verschlechterung detektierbar. Da die Übertragungsfunktionen nichtlinear und auch bezüglich der Signale bei Nullfluss nicht-proportional verschieden sind, führt eine gleichzeitige Störung der Sensoren zu inkonsistenten Signalen und damit verknüpften Fluidflüssen.

Dies liegt daran, dass im Zuge der Kalibrierung zwei ungleiche, nichtlineare und nicht-proportionale Übertragungsfunktionen zu Messwerten eines Fluidflusses zugeordnet werden. Die Übertragungsfunktionen stehen dann über die Kalibrierung in einer Gültigkeitsbeziehung, welche Werte einer der Funktionen einem zugeordneten gültigen Wert der anderen Übertragungsfunktion zuordnet. Ändert sich nun eine der Übertragungsfunktionen, so gilt dieser Zusammenhang nicht mehr. Ändern sich beide Übertragungsfunktionen z.B. durch gleichartige Alterung oder sonstige Verschlechterung der Durchflusssensoren, so ist durch die Nichtlinearität und nicht-proportionale Ausbildung der Übertragungsfunktionen gewährleistet, dass es zwangsläufig zu einer Inkonsistenz der Signale der Durchflusssensoren kommen muss.

Gemäß der Erfindung sind die Übertragungsfunktionen des ersten Durchflusssensors und des zweiten Durchflusssensors dadurch unterschiedlich gestaltet, dass die Bypass-Anordnung abschnittweise mit verschiedenen Strömungswiderständen ausgebildet wird. Der erste Durchflusssensor wird in einem Bereich mit einem anderen Strömungswiderstand angeordnet als der zweite Durchflusssensor.

Auf welche Weise die Strömungswiderstände der verschiedenen Abschnitte einer Bypass-Anordnung variiert werden, ist grundsätzlich beliebig, wobei auf einer Einhaltung einer möglichst laminaren Strömung zu achten ist.

In einer besonders bevorzugten Gestaltung dieser Ausführungsform weist die Bypass-Anordnung im Bereich des ersten Durchflusssensors einen anderen freien Querschnitt auf als im Bereich des zweiten Durchflusssensors.

Diese Gestaltung kann beispielsweise erreicht werden, indem sich ein Leitungsweg oder Kanal der Bypass-Anordnung abschnittsweise erweitert oder verjüngt und die Durchflusssensoren in unterschiedlichen Abschnitten mit verschiedenen Querschnitten platziert werden. Auf diese Weise kann bei identischem Volumenstrom durch die zusammenhängenden Abschnitte der Bypass-Anordnung ein abschnittsweise unterschiedliches Strömungsverhalten erreicht werden. Wird beispielsweise ein erweiterter Bereich in einen Abschnitt mit einem Bypass-Abschnitt gekoppelt, der einen geringeren Querschnitt aufweist, ist zwangsläufig die Strömung im Bereich mit dem geringeren Querschnitt auf eine höhere Strömungsgeschwindigkeit gebracht als in dem Bereich mit vergrößertem Querschnitt. Obwohl beide Durchflusssensoren dann mit demselben Fluidstrom gekoppelt sind, der die Bypass-Anordnung durchströmt, sehen sie unterschiedliche Fluidgeschwindigkeiten. Bei der Kalibrierung wird sich also ein unterschiedlicher Signalzusammenhang ergeben, da bei demselben Fluidstrom durch das Hauptströmungsrohr unterschiedliche Strömungsgeschwindigkeiten an beiden Strömungssensoren in der Bypass-Anordnung erfasst werden.

Auf diese Weise können unterschiedliche und nichtlineare Übertragungsfunktionen einfach realisiert werden, selbst wenn Durchflusssensoren identischer Bauart zum Einsatz kommen.

In einer alternativen Gestaltung der Erfindung ist die Bypass-Anordnung mit wenigstens zwei separaten Bypass-Kanälen ausgebildet, welche entlang des Umfangs des Hauptströmungsrohrs versetzt ausgebildet sind. Der erste Durchflusssensor ist in einem ersten der beiden separaten Bypass-Kanäle mit der Bypass-Anordnung gekoppelt und der zweite Durchflusssensor ist in einem zweiten der zwei separaten Bypass-Kanäle mit der Bypass-Anordnung gekoppelt.

In diesem Ausführungsbeispiel werden die Fluidströme durch die Bypass-Anordnung durch getrennte Kanäle geleitet, die unterschiedliche Strömungsbedingungen für die gekoppelten Durchflusssensoren aufweisen. Dies kann z.B. durch verschiedene Längen, durch verschiedene Querschnitte oder durch die unterschiedliche Platzierung gegenüber den Flussbegrenzungsmitteln erreicht werden. Beispielsweise kann einer der Bypass-Kanäle einen kürzeren Abschnitt des Hauptströmungsrohres überbrücken als ein anderer.

Auch auf diese Weise erhält man für die gekoppelten Durchflusssensoren unterschiedliche Übertragungsfunktionen für die erfindungsgemäße Plausibilitätskontrolle.

Gemäß einer weiteren Ausführungsform der Erfindung sind die Flussbegrenzungsmittel als Körper mit einer Mehrzahl von parallelen Strömungskanälen ausgebildet. Eine derartige Gestaltung der Flussbegrenzungsmittel begünstigt die laminaren Strömungen durch das Hauptströmungsrohr und reproduzierbare Zusammenhänge zwischen den Messwerten durch die Bypass-Anordnung und dem Fluidtransport durch das Hauptströmungsrohr.

Es ist besonders bevorzugt, wenn die parallelen Strömungskanäle als Rohrbündel ausgebildet sind und die Strömungskanäle einen runden oder wabenförmigen Querschnitt aufweisen.

Derartige Flussbegrenzungsmittel sind am Markt verfügbar und haben sich bei der gezielten Begünstigung von Druckdifferenzen in Fluidströmen bewährt.

Je nach Anordnung der Durchflusssensoren weisen diese einen sensorspezifischen Nutzbereich auf. Ist nämlich der Fluidfluss geringer als ein vorgegebener Mindestfluidfluss oder größer als ein zulässiger Höchstfluidfluss, können die Sensorsignale einen Mangel hinsichtlich der Reproduzierbarkeit und Repräsentanz für den zugehörigen Fluidfluss aufweisen. In einem mittleren Bereich sind jedoch die Daten des Sensors repräsentativ für den tatsächlichen Fluidfluss. Gemäß einer Ausführungsform der Erfindung ist die Auswerteschaltung derart ausgebildet, dass für jeden der Durchflusssensoren derjenige Bereich von Signalwerten als sensorspezifischer Nutzbereich gespeichert wird, der einem Signalbereich des jeweiligen Durchflusssensors bei Fluidflüssen entspricht, bei welchen die jeweiligen Sensorsignale als repräsentativ für den Fluidfluss bestimmt sind. Für jeden der Sensoren wird dann in der Auswerteschaltung ein solcher zulässiger Wertebereich der Sensorsignale und Fluidflüsse gespeichert. Dies kann dazu genutzt werden, unterschiedliche Bereiche von Fluidflüssen durch unterschiedliche Sensorsignale abzudecken. Weisen also beispielsweise die Signale sämtlicher Sensoren darauf hin, dass sich zwar ein einzelner Sensor in einem zulässigen sensorspezifischen Nutzbereich bei den aktuellen Betriebsbedingungen befindet, so können Signale eines anderen Sensors gegebenenfalls ignoriert werden.

Dies ist in einer bevorzugten Ausführungsform der Erfindung der Fall, bei der für die Bestimmung des Fluiddurchflusses nur solche Durchflusssensoren bei der Auswertung berücksichtigt werden, deren Signale in zugeordneten sensorspezifischen Nutzbereichen liegen.

Eine solche Auswertung erweitert die Möglichkeiten der Gesamtauswertung, da in Bereichen, die mit einem einzigen Sensor nicht abzudecken sind, die unterschiedlichen Übertragungsfunktionen und gegebenenfalls auch verschiedenem Anströmungsverhalten der einzelnen Sensoren zu einem erweiterten Gesamtbereich der Erfassung führen. Der Gesamtbereich der Erfassung kann nämlich gebildet werden aus der Vereinigungsmenge der einzelnen zulässigen Messbereiche der Durchflusssensoren.

In einer Weiterbildung der Erfindung wird außerdem zu jedem Durchflusssensor ein sogenannter zugeordneter diagnostizierbarer Nutzbereich bestimmt und als Teilbereich des zugeordneten sensorspezifischen Nutzbereiches gespeichert. Dieser diagnostizierbare Nutzerbereich entspricht dem Bereich, bei dem sämtliche Durchflusssensoren Signale liefern, die repräsentativ für den Fluidfluss sind. Es wird also die Schnittmenge sämtlicher Nutzbereiche gebildet und zu jedem Durchflusssensor, bezogen auf dessen Signalwerte als diagnostizierbarer Nutzbereich gespeichert.

Gemäß einer Weiterbildung der Erfindung wird eine Plausibilitätsprüfung nur dann durchgeführt, sofern die Signalwerte wenigstens eines der Durchflusssensoren innerhalb des dem jeweiligen Durchflusssensor zugeordneten diagnostizierbaren Nutzbereiches liegen.

Für eine Plausibilitätsprüfung ist es grundsätzlich erforderlich, dass sämtliche Sensoren in ihrem sensorspezifischen Nutzbereich arbeiten und daher auch Signale liefern, die repräsentativ für den Fluidfluss sind. Nur in einem solchen Fall, können die Signale der einzelnen Sensoren für eine Plausibilitätsprüfung heranzogen werden. Gemäß dieser Weiterführung der Erfindung genügt es, wenn einer der Sensoren anzeigt, dass die Signale in den diagnostizierbaren Nutzbereich liegen. Ist das Signal des anderen Sensors dann nicht konsistent, kann auf einen Fehlerzustand in der Sensoranordnung zurückgeschlossen werden. Grundsätzlich müssten in einem solchen Fall nämlich sämtliche Sensoren konsistente Messwerte bezüglich des Fluidstromes liefern.

Die Erfindung wird nun anhand der beiliegenden Zeichnungen näher erläutert.
Figur 1 zeigt schematisch eine Messvorrichtung mit einem Fluid-Bypass gemäß dem Stand der Technik.
Figur 2 zeigt eine erste Ausführungsform einer erfindungsgemäßen Messvorrichtung.
Figur 3a zeigt Übertragungsfunktionen der Durchflusssensoren aus Figur 2 bei fehlerfreier Funktion;
Figur 3b zeigt Übertragungsfunktionen der Durchflusssensoren aus Figur 2 im Falle einer Fehlfunktion beider Durchflusssensoren;
Figur 4 zeigt eine zweite Ausführungsform einer erfindungsgemäßen Messvorrichtung.

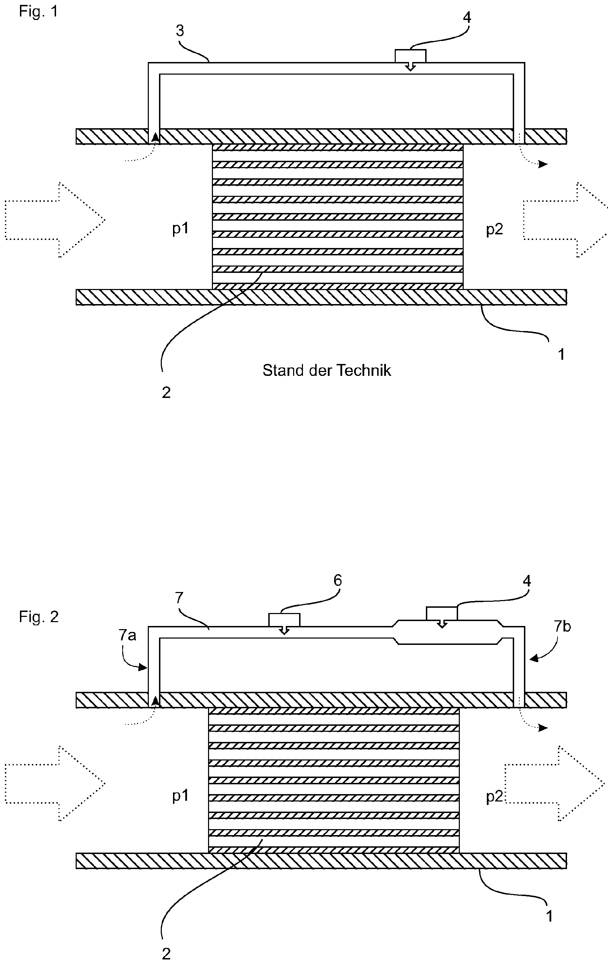

In Figur 1 ist eine Messvorrichtung gemäß dem Stand der Technik gezeigt. Ein Hauptströmungsrohr 1 ist zur Durchleitung eines Fluides, in diesem Fall einer Gasströmung, ausgebildet. Die Gasströmung ist in ihrer Richtung durch gepunktete Pfeile in Bild 1 schematisch dargestellt. Eingepasst in das Hauptströmungsrohr ist eine Rohrbündelanordnung 2 als Flussbegrenzungsmittel. Dieses Flussbegrenzungsmittel reduziert an seinem Einbauort den freien Querschnitt des Hauptströmungsrohres 1 und sorgt für eine Druckerhöhung an der stromaufwärts gewandten Seite des Flussbegrenzungsmittels 2. Dort wird der Druck auf einen Druck P1 erhöht, während auf der Abstromseite der Flussbegrenzungsmittel ein Druck P2 herrscht. Die Druckdifferenz ΔP = P1 - P2 führt zu einer abgezweigten Strömung, die durch einen Bypass 3 geleitet wird. Auf der stromaufwärts gelegenen Seite (in der Zeichnung links) tritt Fluid in den Bypass 3 ein und strömt, gemäß dem Druckgefälle, auf der Abstromseite der Flussbegrenzungsmittel 2 wieder in das Hauptströmungsrohr zurück. Am Bypass ist eine Durchflussmesseinrichtung in Gestalt eines Durchflusssensors 4 mit dem Bypass-Strom gekoppelt. Diesem Ausführungsbeispiel ist ein thermischer Durchflusssensor 4 vorgesehen. Die Flussbegrenzungsmittel sind so ausgebildet, dass die erzeugte Druckdifferenz zwischen der Einströmseite und der Ausströmseite nahezu linear mit der Durchflussrate des Hauptströmungsrohres skaliert. Der Durchflusssensor 4 ist mit einer Kennlinie kalibriert oder geeicht, welche eine Rückrechnung von den Sensorsignalen auf die Hauptströmung erlaubt. Entsprechend kann die mit dem Durchflusssensor 4 erfasste Fluidströmung als repräsentatives Signal für die Hauptströmung durch das Hauptströmungsrohr 1 verwendet werden.

Bei Alterung des Durchflusssensors 4, einem technischen Defekt oder auch einer Verstopfung der Flussbegrenzungsmittel 2 können Zustände eintreten, in denen der Durchflusssensor 4 Daten liefert, die nicht mit dem tatsächlichen Durchfluss durch das Hauptströmungsrohr 1 übereinstimmen. Eine Verstopfung der Flussbegrenzungsmittel 2 führt beispielsweise zu einer weiteren Druckerhöhung des Druckes P1 und dazu zu einem verstärkten Strom durch den Bypass 3. Der Durchflusssensor 4 registriert dann eine höhere Strömung als tatsächlich vorliegt, da er sich weiterhin auf die ursprünglich kalibrierten Daten mit dem unverstopften Flussbegrenzungsmittel 2 verlässt.

Figur 2 zeigt eine erste Ausführungsform der Erfindung. In dem Hauptströmungsrohr 1 ist auch hier eine Rohrbündelanordnung 2 als Flussbegrenzungsmittel angeordnet. Der Aufbau entspricht in dieser Gestaltung bezüglich des Hauptströmungsrohres der Anordnung aus Figur 1. Die Bypass-Anordnung 7 weist einen Zustrom-Abgriff 7a und einen Abstrom-Abgriff 7b auf. Durch die Druckerhöhung vor den Flussbegrenzungsmitteln wird ein Teil des Fluidstromes durch das Hauptströmungsrohr in den Zustrom-Abgriff 7a einströmen und aus dem Abstrom-Abgriff 7b wieder ausströmen.

Entlang der Bypass-Anordnung 7 sind zwei Durchflusssensoren 4 und 6 angeordnet. In dieser Ausführungsform handelt es sich um baugleiche Durchflusssensoren mit thermischem Erfassungsprinzip. Der Durchflusssensor 6 ist jedoch in einem Abschnitt der Bypass-Anordnung 7 angeordnet, der einen geringeren Querschnitt aufweist als der Abschnitt in welchem der Durchflusssensor 4 angeordnet ist. Die Strömungsgeschwindigkeit des Fluides durch die Bypass-Anordnung 7 ist dann bei dem Durchflusssensor 6 gegenüber dem Durchflusssensor 4 erhöht. Auf diese Weise sehen beide Durchflusssensoren unterschiedliche Strömungsgeschwindigkeiten, obwohl sie denselben Bypass-Fluidstrom durch die Bypass-Anordnung 7 messen.

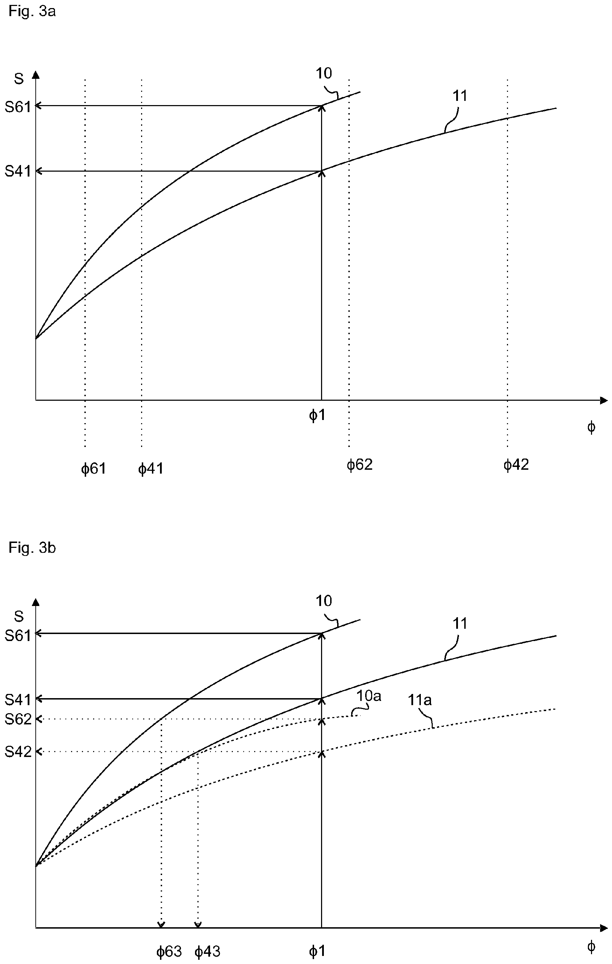

In Figur 3a ist der funktionale Zusammenhang zwischen dem Fluidstrom φ und dem Sensorsignal S dargestellt. Die Linie 10 zeigt die Signale des Sensors 6 bei einem gegebenen Fluidstrom. Die Linie 11 zeigt entsprechend die Signale des Sensors 4. Die Linie 10 liegt bei baugleichen Sensoren oberhalb der Linie 11, da die Strömungsgeschwindigkeit am Ort des Sensors 4 größer ist als am Ort des Sensors 11, wenn von identischem Fluidstrom ausgegangen wird. Die Linien 10 und 11 repräsentieren die jeweiligen Übertragungsfunktionen der zugeordneten Durchflusssensoren 6 bzw. 4. Im Zuge einer Kalibrierung eine entsprechende Zuordnung zu dem Fluidströmen durch Vorgabe bekannter Fluidströme vorgenommen und die Übertragungsfunktionen werden in der Auswerteschaltung gespeichert, die mit den Durchflusssensoren gekoppelt ist.

Es ist dargestellt, dass bei dem Fluidstrom φ1 durch das Hauptströmungsrohr verschiedene Werte entlang der Linien 10 und 11 als Sensorsignale anfallen. Die Sensoren liefern also die Signale S61 und S41, wobei das Signal S61 von dem Sensor 6 geliefert wird und das Signal S41 von dem Sensor 4 geliefert wird. Da die Auswerteschaltung nur die Signale S61 und S41 ausliest und darauf auf einen Fluidstrom φ1 zurückschließt, werden die Signale S61 und S41 getrennt ausgewertet und es wird festgestellt, dass diese einem identischen Fluidstrom φ1 zugeordnet sind. In diesem Fall ist also eine fehlerfreie Funktion der Sensoren festzustellen.

In Figur 3a sind außerdem mehrere vertikale Begrenzungen für Abschnitte entlang der Achse des Fluidstromes dargestellt. Die Begrenzungen φ61 und φ62 begrenzen denjenigen Wertebereich, in welchem der Sensor 6 entlang seiner Übertragungsfunktion 10 auswertbare Werte liefert. Der Sensor 11 ist hingegen erst bei höheren Fluidströmen nutzbar, dann jedoch in einem weiteren Bereich, nämlich in den Bereich von φ41 bis φ42. Es ist erkennbar, dass der Schnittbereich zwischen den Begrenzungen φ41 und φ62 der gültige Bereich für beide Sensoren ist und entsprechend der diagnostizierbare Nutzbereich in diesem Beispiel. In diesem Bereich können Plausibilitätsprüfungen durch Vergleich der ermittelten Fluidflüsse vorgenommen werden. Dennoch kann die Messeinrichtung durchaus auch im Bereich zwischen φ61 und φ41 sowie zwischen φ62 und φ42 die dort jeweils gültigen Werte einzelner Sensoren auswerten, dann jedoch ohne Plausibilitätsvergleich. Ein Plausibilitätsvergleich wird nur dann durchgeführt, wenn wenigstens einer der Sensoren angibt, dass tatsächlich ein Fluidstrom im Bereich zwischen φ41 und φ62 vorliegt.

Während der vorgenannte Fall die ordnungsgemäße Funktion mit einer Plausibilitätskontrolle sicherstellte, zeigt Figur 3b dem Fall, in dem beide Sensoren in gleichartiger Weise gealtert sind und fehlerhaft arbeiten. Aufgrund einer Störung oder Alterung sind die funktionalen Zusammenhänge verändert, so dass sich für den Sensor 6 die gestauchte Übertragungsfunktion 10a ergibt und für den Sensor 4 die gestauchte Übertragungsfunktion 11a. Wiederum fließt tatsächlich ein Fluidstrom φ1 durch die Messvorrichtung. Bei intakter Vorrichtung würden wiederum die konsistenten Messwerte S61 und S41 gemessen und die Auswerteschaltung würde eine ordnungsgemäße Funktion feststellen. Aufgrund der verschlechterten Zustände der Sensoren werden nun jedoch Signale entlang der Linien 10a und 11a geliefert, nämlich die Signale S62 und S42. Die Auswerteschaltung empfängt diese Signale und ordnet diese den gespeicherten Übertragungsfunktionen 10 und 11 der intakten Sensoren zu. Bei dem Signal S62 ordnet sie entsprechend einen Wert φ63 entlang der Fluidstromachse zu und bei dem Wert S42 einen Wert φ43. Aufgrund der Nicht-Linearität und Nicht-Proportionalität der Funktionen liegen diese Werte φ63 und φ43 so weit auseinander, dass die Auswerteschaltung eine Inkonsistenz im Rahmen ihrer Plausibilitätsprüfung erkennt. Ein Fehlerzustand wird detektiert und gemeldet. Auf diese Weise kann auch eine gleichartige Verschlechterung von zwei Durchflusssensoren verlässlich erkannt werden, was bei einer rein redundanten Anordnung der Sensoren in einer Bypass-Anordnung nicht möglich wäre.

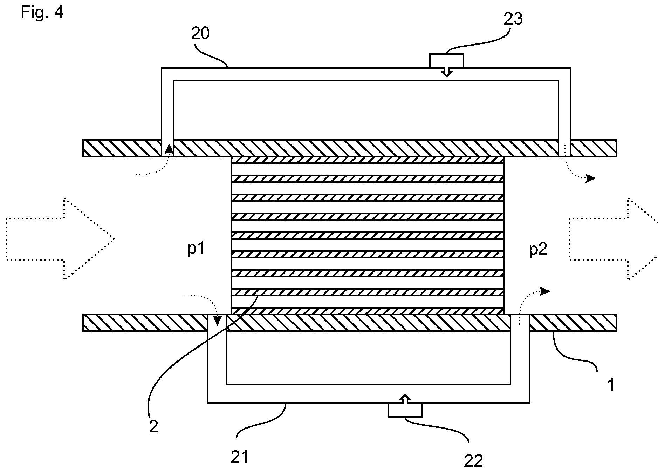

Figur 4 zeigt eine zweite Ausführungsform einer erfindungsgemäßen Messvorrichtung. In dieser Ausführungsform ist die Bypass-Anordnung mit zwei getrennten Bypass-Kanälen 20 und 21 ausgebildet. Der Bypass-Kanal 20 erstreckt sich über einen längeren Abschnitt entlang des Hauptströmungsrohres 1, jedoch insgesamt mit einem geringeren Kanalquerschnitt als der Bypass 21. Der Bypass 21 überrückt einen kürzeren Abschnitt und hat sein Zustrom-Abgriff unmittelbar vor den Flussbegrenzungsmitteln 2 und seinen Abstrom-Abgriff unmittelbar hinter den Flussbegrenzungsmitteln 2. In jedem der Bypass-Kanäle 20 und 21 ist jeweils ein Durchflusssensor 22 bzw. 23 angeordnet. Sowohl aufgrund der unterschiedlichen Spannweite der Bypässe als auch aufgrund der unterschiedlichen Querschnittsgestaltung sehen die Sensoren 22 und 23 bei identischem Fluidstrom das Hauptströmungsrohr 1 unterschiedliche Fluidströme und bilden unterschiedliche, nichtlineare Übertragungsfunktionen. Diese Gestaltung ist eine Alternative zu der Gestaltung eines einzigen Bypass-Kanals mit variierten Querschnitten. Die Auswertung und Plausibilitätskontrolle arbeitet jedoch gleichartig wie bei einem System mit mehreren Durchflusssensoren in unterschiedlich dimensionierten Abschnitten eines einzigen Bypass-Kanals.

## Patentansprüche

1. Messvorrichtung zur Erfassung eines Fluidflusses,
mit einem Hauptströmungsrohr zur Führung eines Fluidflusses,
mit einer Bypass-Anordnung, welche wenigstens einen Zustrom-Abgriff und wenigstens einen Abstrom-Abgriff aufweist, welche beide mit dem Hauptströmungsrohr gekoppelt sind,
mit Flussbegrenzungsmitteln, welche in dem Hauptströmungsrohr zwischen dem Zustrom-Abgriff und dem Abstrom-Abgriff der Bypass-Anordnung angeordnet sind und den durchströmbaren Querschnitt des Hauptströmungsrohres reduzieren,
wobei ein erster Durchflusssensor mit der Bypass-Anordnung gekoppelt ist,
wobei eine Auswerteschaltung mit einem Signalausgang des ersten Durchflusssensors gekoppelt ist,
wobei ein zweiter Durchflusssensor mit der Bypass-Anordnung gekoppelt ist,
wobei die Auswerteschaltung mit einem Signalausgang des zweiten Durchflusssensors gekoppelt ist,
wobei die Auswerteschaltung ausgebildet ist, um Signalwerte des ersten und des zweiten Durchflusssensors zu erfassen und daraus einen Fluiddurchfluss durch die Messvorrichtung zu bestimmen,
**dadurch gekennzeichnet,**
**dass** die Bypass-Anordnung abschnittsweise verschiedene Strömungswiderstände aufweist und der erste Durchflusssensor in einem Bereich mit anderem Strömungswiderstand angeordnet ist als der zweite Durchflusssensor, so dass die Sensoren zueinander verschiedene Übertragungsfunktionen zur Wandlung eines Fluidflusses durch dieselbe Bypass-Anordnung in ein Sensorsignal aufweisen, so dass die Sensoren bei einem identischen Fluidfluss durch das Hauptströmungsrohr unterschiedliche Sensorsignale liefern, wobei die Übertragungsfunktionen jeweils nichtlineare Funktionen sind und zueinander nicht proportional sind,
wobei die Auswerteschaltung ausgebildet ist, um wiederholt eine Plausibilitätsprüfung anhand der Signalwerte des ersten und des zweiten Durchflusssensors auszuführen und in Abhängigkeit von der Plausibilitätsprüfung eine Störung eines der Sensoren oder beider Sensoren zu bestimmen, wobei die Auswerteschaltung ausgebildet ist, bei der Plausibilitätsprüfung die von dem ersten und dem zweiten Durchflusssensor jeweils signalisierten Fluidflüsse zu vergleichen und bei einer Abweichung der jeweiligen Fluidflüsse über eine vorgegebene Schwelle hinaus, eine Störung festzustellen.

2. Messvorrichtung nach Anspruch 1, wobei die Bypass-Anordnung im Bereich des ersten Durchflusssensors einen anderen freien Querschnitt aufweist als im Bereich des zweiten Durchflusssensors.

3. Messvorrichtung gemäß einem der Ansprüche 1 bis 2, wobei die Bypass-Anordnung eine einzige, zusammenhängende Leitungsstruktur aufweist.

4. Messvorrichtung gemäß einem der Ansprüche 1 bis 2, wobei die Bypass-Anordnung wenigstens zwei separate Bypass-Kanäle aufweist.

5. Messvorrichtung gemäß Anspruch 4, wobei die wenigstens zwei separaten Bypass-Kanäle entlang des Umfangs des Hauptströmungsrohres versetzt ausgebildet sind, wobei der erste Durchflusssensor in einem ersten der zwei separaten Bypass-Kanäle mit der Bypass-Anordnung gekoppelt ist und wobei der zweite Durchflusssensor in einem zweiten der zwei separaten Bypass-Kanäle mit der Bypass-Anordnung gekoppelt ist.

6. Messvorrichtung nach einem der Ansprüche 1 bis 5, wobei wenigstens ein Abschnitt der Flussbegrenzungsmittel als Körper mit einer Mehrzahl von parallelen Strömungskanälen ausgebildet ist.

7. Messvorrichtung nach Anspruch 6, wobei die parallelen Strömungskanäle als Rohrbündel ausgebildet sind und wobei die Strömungskanäle einen runden oder wabenförmigen Querschnitt aufweisen.

8. Messvorrichtung nach einem der Ansprüche 1 bis 7, wobei die Auswerteschaltung ausgebildet ist, um für jeden Durchflusssensor einen Bereich von Signalwerten als sensorspezifischen Nutzbereich zu speichern, wobei der sensorspezifische Nutzbereich dem Signalbereich des jeweiligen Durchflusssensors zwischen einem ersten Fluidfluss und einem zweiten, größeren Fluidfluss entspricht, in welchem die jeweiligen Sensorsignale als repräsentativ für den Fluidfluss bestimmt sind.

9. Messvorrichtung nach Anspruch 8, wobei die Auswerteschaltung ausgebildet ist, für die Bestimmung des Fluiddurchflusses nur solche Durchflusssensoren zu berücksichtigen, deren Signale im zugeordneten sensorspezifischen Nutzbereich liegen.

10. Messvorrichtung nach Anspruch 8 oder 9, wobei die Auswerteschaltung ausgebildet ist, um zu jedem Durchflusssensor einen zugeordneten diagnostizierbaren Nutzbereich als Teilbereich des sensorspezifischen Nutzbereiches zu speichern, wobei der diagnostizierbare Nutzbereich dem Signalbereich des jeweiligen Durchflusssensors zwischen einem dritten Fluidfluss und einem vierten, größeren Fluidfluss entspricht, in welchem die Sensorsignale sämtlicher Durchflusssensoren als repräsentativ für den Fluidfluss bestimmt sind.

11. Messvorrichtung nach Anspruch 10, wobei die Auswerteschaltung ausgebildet ist, um die Plausibilitätsprüfung auszuführen, sofern die Signalwerte wenigstens eines der Durchflusssensoren innerhalb des dem jeweiligen Durchflusssensor zugeordneten diagnostizierbaren Nutzbereiches liegen.

## Claims

1. Measuring device for detecting a fluid flow,
with a main flow pipe for guiding a fluid flow,
with a bypass arrangement, which has at least one inflow tap and at least one outflow tap, which are both coupled to the main flow pipe,
with flow-limiting means which are arranged in the main flow pipe between the inflow tap and the outflow tap of the bypass arrangement and reduce the flow cross-section of the main flow pipe,
wherein a first flow sensor is coupled to the bypass arrangement,
wherein an evaluation circuit is coupled to a signal output of the first flow sensor,
wherein a second flow sensor is coupled to the bypass arrangement,
wherein the evaluation circuit is coupled to a signal output of the second flow sensor,
wherein the evaluation circuit is designed to detect signal values of the first and the second flow sensor and from the latter to determine a fluid flow through the measuring device,
**characterised in that**
the bypass arrangement has different flow resistances in different sections and the first flow sensor is arranged in an area with a different flow resistance than the second flow sensor, so that the sensors have different transfer functions for converting a fluid flow through the same bypass arrangement into a sensor signal, so that the sensors with an identical fluid flow through the main flow pipe deliver different sensor signals, wherein the transfer functions are non-linear functions respectively and are not proportional to one another,
wherein the evaluation circuit is designed to perform repeatedly a plausibility check with reference to the signal values of the first and the second flow sensor and
as a function of the plausibility check to determine a fault in one of the sensors or both sensors, wherein the evaluation circuit is designed in the plausibility check to compare the fluid flows signalled respectively by the first and the second flow sensor and to detect a fault if there is a deviation between the respective fluid flows beyond a predefined threshold.

2. Measuring device according to claim 1, wherein the bypass arrangement in the area of the first flow sensor has a different free cross-section than in the area of the second flow sensor.

3. Measuring device according to any of claims 1 to 2, wherein the bypass arrangement has a single, continuous line structure.

4. Measuring device according to any of claims 1 to 2, wherein the bypass arrangement has at least two separate bypass channels.

5. Measuring device according to claim 4, wherein the at least two separate bypass channels are designed to be offset along the circumference of the main flow pipe, wherein the first flow sensor is coupled in a first of the two separate bypass channels to the bypass arrangement and wherein the second flow sensor is coupled in a second of the two separate bypass channels to the bypass arrangement.

6. Measuring device according to any of claims 1 to 5, wherein at least one section of the flow-limiting means is designed as a body with a plurality of parallel flow channels.

7. Measuring device according to claim 6, wherein the parallel flow channels are designed as pipe bundles and wherein the flow channels have a round or honeycomb cross-section.

8. Measuring device according to any of claims 1 to 7, wherein the evaluation circuit is designed to save for each flow sensor a range of signal values as a sensor-specific useful range, wherein the sensor-specific useful range corresponds to the signal range of the respective flow sensor between a first fluid flow and a second, larger fluid flow, in which the respective sensor signals are determined as representative of the fluid flow.

9. Measuring device according to claim 8, wherein the evaluation circuit is designed for determining the fluid flow to consider only those flow sensors, whose signals lie within the assigned sensor-specific useful range.

10. Measuring device according to claim 8 or 9, wherein the evaluation circuit is designed to save to each flow sensor an assigned diagnosable useful range as part of the sensor-specific useful range, wherein the diagnosable useful range corresponds to the signal range of the respective flow sensor between a third fluid flow and a fourth, larger fluid flow, in which the sensor signals of all flow sensors are determined as representative of the fluid flow.

11. Measuring device according to claim 10, wherein the evaluation circuit is designed to perform the plausibility check, provided that the signal values of at least one of the flow sensors are within the diagnosable useful range assigned to the respective flow sensor.

## Revendications

1. Dispositif de mesure servant à détecter un flux de fluide,
avec un tube d'écoulement principal servant à guider un flux de fluide,
avec un ensemble de dérivation, lequel présente au moins un point de prélèvement de flot entrant et au moins un point de prélèvement de flot sortant, qui sont couplés tous deux au tube d'écoulement principal,
avec des moyens de limitation de flux, lesquels sont disposés dans le tube d'écoulement principal entre le point de prélèvement de flot entrant et le point de prélèvement de flot sortant de l'ensemble de dérivation et réduisent la section transversale pouvant être traversée du tube d'écoulement principal,
dans lequel un premier capteur de débit est couplé à l'ensemble de dérivation,
dans lequel un circuit d'évaluation est couplé à une sortie de signal du premier capteur de débit,
dans lequel un deuxième capteur de débit est couplé à l'ensemble de dérivation,
dans lequel le circuit d'évaluation est couplé à une sortie de signal du deuxième capteur de débit,
dans lequel le circuit d'évaluation est réalisé pour détecter des valeurs de signaux du premier et du deuxième capteur de débit et pour définir sur cette base un débit de fluide par le dispositif de mesure,
**caractérisé en ce**
**que** l'ensemble de dérivation présente par endroits des résistances d'écoulement différentes et le premier capteur de débit est disposé dans une zone avec une résistance d'écoulement autre que le deuxième capteur de débit, de sorte que les capteurs présentent des fonctions de transmission différentes les unes des autres pour convertir un flux de fluide à travers le même ensemble de dérivation en un signal de capteur, de sorte que les capteurs fournissent, pour un flux de fluide identique à travers le tube d'écoulement principal, des signaux de capteur différents, dans lequel les fonctions de transmission sont des fonctions respectivement non linéaires et ne sont pas proportionnelles les unes par rapport aux autres,
dans lequel le circuit d'évaluation est réalisé pour exécuter de manière répétée un contrôle de plausibilité à l'aide des valeurs de signaux du premier et du deuxième capteur de débit et pour définir, en fonction du contrôle de plausibilité, une défaillance d'un des capteurs ou des deux capteurs, dans lequel le circuit d'évaluation est réalisé pour comparer, lors du contrôle de plausibilité, les flux de fluide signalés respectivement par le premier et le deuxième capteur de débit et pour constater, en présence d'un écart des flux de fluide respectifs au-delà d'un seuil spécifié, une défaillance.

2. Dispositif de mesure selon la revendication 1, dans lequel l'ensemble de dérivation présente, dans la zone du premier capteur de débit, une section transversale libre autre que dans la zone du deuxième capteur de débit.

3. Dispositif de mesure selon l'une quelconque des revendications 1 à 2, dans lequel l'ensemble de dérivation présente une unique structure de conduit continue.

4. Dispositif de mesure selon l'une quelconque des revendications 1 à 2, dans lequel l'ensemble de dérivation présente au moins deux canaux de dérivation séparés.

5. Dispositif de mesure selon la revendication 4, dans lequel les au moins deux canaux de dérivation séparés sont réalisés de manière décalée le long de la périphérie du tube d'écoulement principal, dans lequel le premier capteur de débit est couplé à l'ensemble de dérivation dans un premier des deux canaux de dérivation séparés et dans lequel le deuxième capteur de débit est couplé à l'ensemble de dérivation dans un second des deux canaux de dérivation séparés.

6. Dispositif de mesure selon l'une quelconque des revendications 1 à 5,
dans lequel
au moins une section des moyens de limitation de flux est réalisée sous la forme de corps avec une multitude de canaux d'écoulement parallèles.

7. Dispositif de mesure selon la revendication 6,
dans lequel les canaux d'écoulement parallèles sont réalisés sous la forme de faisceaux de tubes et dans lequel les canaux d'écoulement présentent une section transversale ronde ou en forme de nid d'abeilles.

8. Dispositif de mesure selon l'une quelconque des revendications 1 à 7,
dans lequel
le circuit d'évaluation est réalisé pour mémoriser pour chaque capteur de débit une plage de valeurs de signaux en tant que plage utile spécifique au capteur, dans lequel la plage utile spécifique au capteur correspond à une plage de signaux du capteur de débit respectif entre un premier flux de fluide et un deuxième flux de fluide plus important, dans lequel les signaux de capteur respectifs sont définis comme étant représentatifs du flux de fluide.

9. Dispositif de mesure selon la revendication 8, dans lequel le circuit d'évaluation est réalisé pour seulement tenir compte, pour la définition du débit de fluide, des capteurs de débit, dont les signaux se situent dans la plage utile spécifique au capteur associée.

10. Dispositif de mesure selon la revendication 8 ou 9, dans lequel le circuit d'évaluation est réalisé pour mémoriser, pour chaque capteur de débit, une plage utile associée pouvant être diagnostiquée en tant que plage partielle de la plage utile spécifique au capteur, dans lequel la plage utile pouvant être diagnostiquée correspond à la plage de signaux du capteur de débit respectif entre un troisième flux de fluide et un quatrième flux de fluide plus important, dans lequel les signaux de capteur de tous les capteurs de débit sont définis comme étant représentatifs du flux de fluide.

11. Dispositif de mesure selon la revendication 10, dans lequel le circuit d'évaluation est réalisé pour exécuter le contrôle de plausibilité tant que les valeurs de signaux d'au moins un des capteurs de débit se situent à l'intérieur de la plage utile pouvant être diagnostiquée associée au capteur de débit respectif.
